# EUROPEAN PATENT APPLICATION

(11) **EP 2 287 783 A1**
(43) Date of publication of application: **23.02.2011**
(21) Application number: 10183628.6
(22) Date of filing: 16.02.2001
(51) Int. Cl.: G06K 19/073, G07F 7/10, G07F 7/08, G06K 19/07, G06Q 20/00

(54) **Electronic credit card - ECC**

(30) Priority: 16.02.2000 AU PP564400
(62) Divisional of application: 01905512.8
(71) Applicant: Ong, Yong Kin (Michael), City Beach, Western Australia 6015 (AU)
(72) Inventor: Ong, Yong Kin (Michael), City Beach, Western Australia 6015 (AU)
(74) Representative: Vossius & Partner

(57) **Abstract**

An electronic credit card comprising a user verification means for verifying the identity of a user; and a communication means for communicating with a transaction station, characterised in that the electronic credit card further comprises a means that generates a unique authorisation code when the user's identity is verified; a storage means that stores the user's account details for use in an electronic funds transfer transaction; wherein the communication means securely communicates the account details of the user and the authorisation code to facilitate an electronic fund transfer transaction.

## Description

This invention relates to the provision of a secure, controlled, and reliable transaction of funds using electronic controlled credit card.

The present credit card environment and systems have the following shortfalls:
1. When a credit card is reported stolen or lost by a holder, he or she has to contact the company or organisation that issued the card to cancel the card in order to prevent illegal transactions. Such action may not occur immediately if the holder is unaware that his or her card is missing.
2. The present security measures undertaken by credit card companies and/or organisations through the use of 'smart card' technology are inadequate to prevent frauds. Similarly the use of holography images on credit cards does not eliminate frauds too.
3. The use of a signature as a validation control may be overlooked and can be forged.
4. The technology behind its usage is outdated and not suitable for a secure transaction via the Internet.
5. It does not prevent hackers who penetrate the 'secure web sites' to make use of credit card details for frauds.
6. Giving a merchant or merchants credit card details is like giving him or her a 'signed blank cheque'. Credit card companies or organisations are not efficient when dealing with insincere merchants.

The electronic credit card - ECC (hereafter known as ECC) is an invention that eliminates the shortfalls in the present credit card system.

ECC is only operational through one of the following process (hereafter known as SAC [security authorisation code]):
1. A user controlled PIN (personal identification number) and/or
2. A user identified fingerprint signature (digital signature) and/or
3. A user eyeball retina signature (digital signature).
   Such process can be self-contained in an ECC or via a database in a local or remote system.
   An audio transducer is used to confirm a successful process via a PIN, fingerprint and eyeball retina scan signature of an ECC holder.

ECC has a self-contained timer that deactivates its SAC after an elapsed time. This feature eliminates a stolen ECC from being used when a PIN and/or digital signature is already activated.

An ECC is self-destructed if a pre-determined number of attempts are made to gain access to its operation in sending SAC. This is to prevent frauds in the event that an ECC is stolen. The authorising distributor could re-initialise an ECC through its control management system that is used to issue ECC.

ECC can be disabled at a Transaction Station (hereafter known as TS) through a system control function controlled by an issuing company or organisation. This enables immediate termination of an ECC if required.

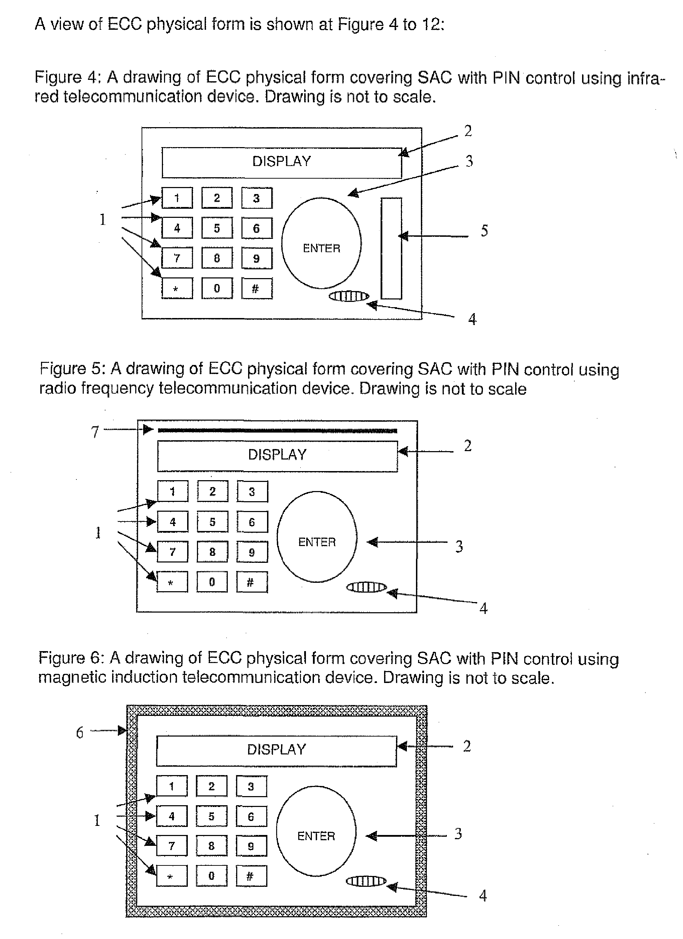

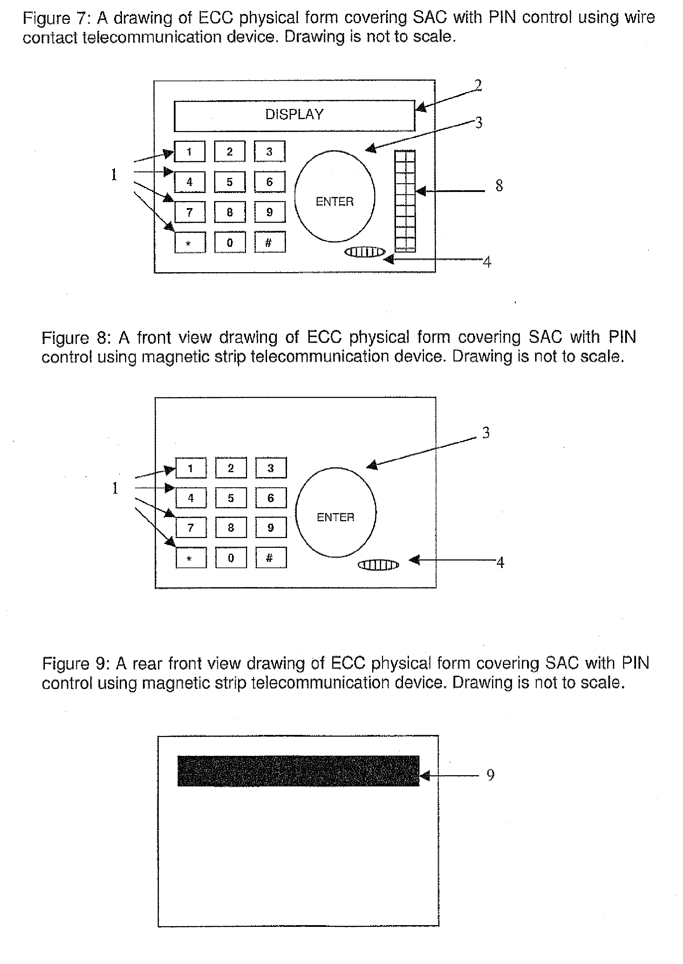

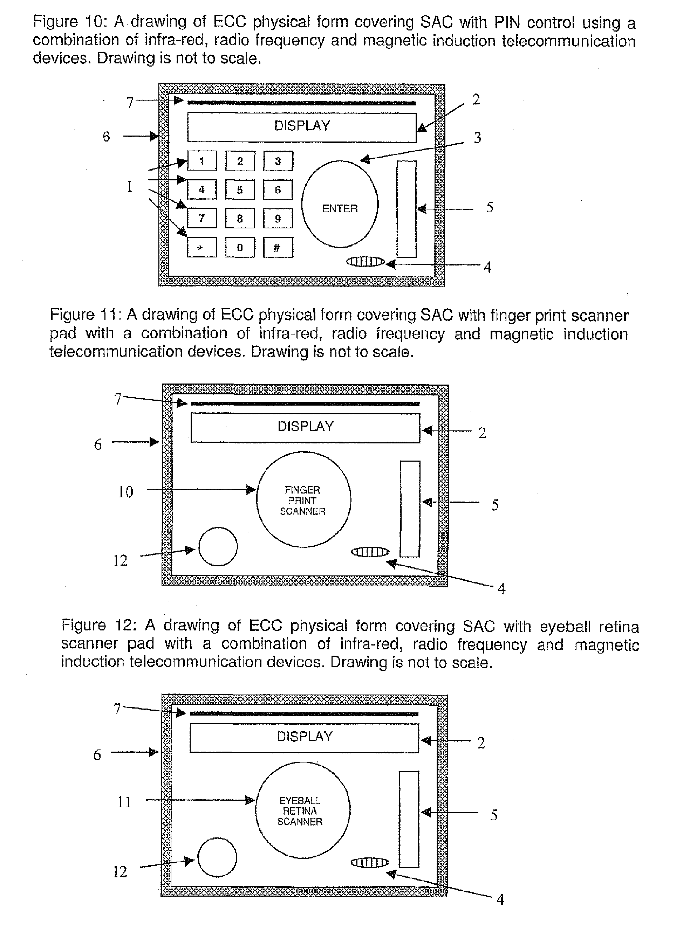

ECC is an intelligent device that communicates with TS via one of the following modes or a combination of the following modes:
1. Infra-red telecommunication process (Figure 4) and/or
2. Radio frequency telecommunication process (Figure 5) and/or
3. Magnetic induction telecommunication process (Figure 6) and/or
4. Wire contact telecommunication (Figure 7) process.

ECC has the capability to download information to a computer system via one of its telecommunication modes above. This ensures data integrity at the time of power source replacement or charging. Furthermore it also facilitates transactional history.

ECC has the capability to generate its own transaction number either in sync with an TS link to a local or remote site system control function or independently. TS may or could be an Internet site with such capability.

ECC financial limit can be verified via TS with link to a local or,remote site system control function. This controls an ECC from generating further transactions once its financial limit is reached. This function of limiting funds is an optional mode that can be either activated by the financial institution that issue the ECC or by the holder to cross check and alert him or her of his or her account balance.

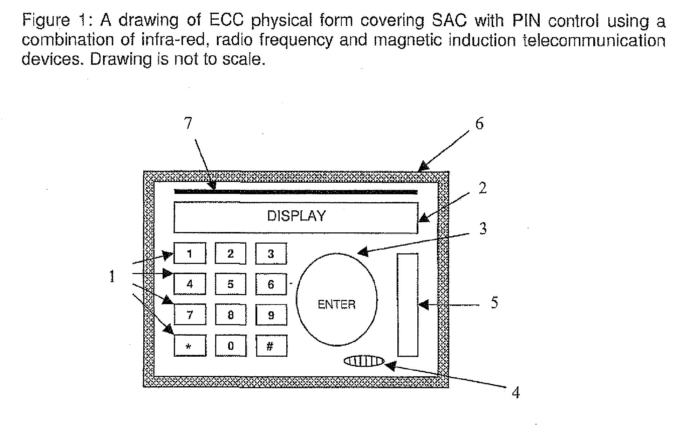

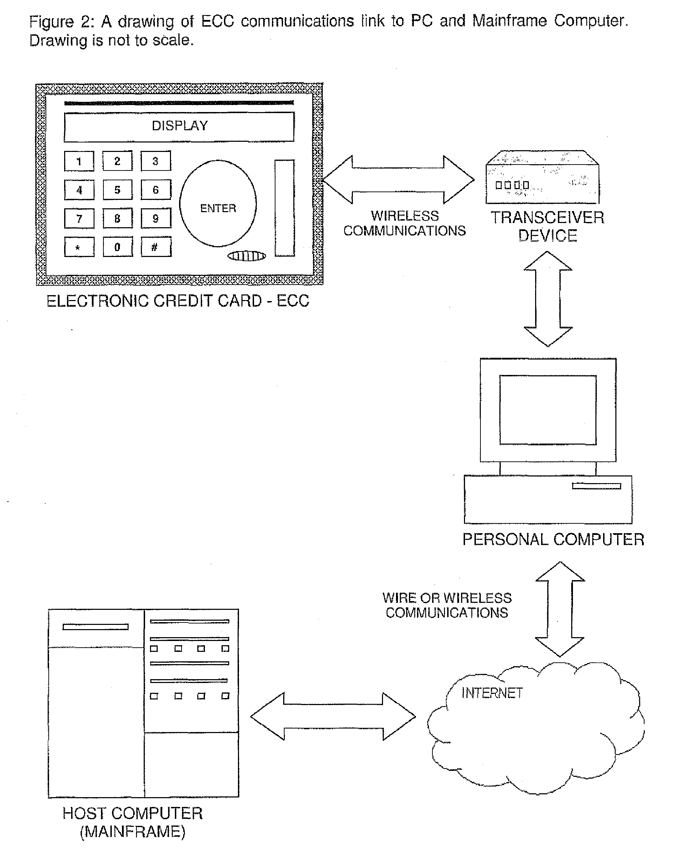

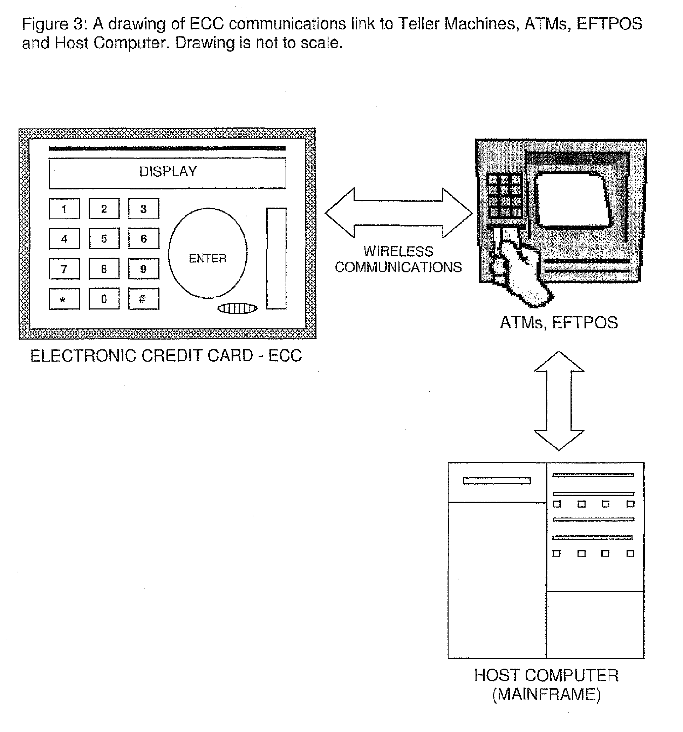

ECC can transact funds to and from an Automatic Teller Machine (ATM) via an ATM management system (this is shown at Figure 3). This enables ECC to provide and support a cash-less society. ECC can also be linked to a Personal Computer (PC) to provide and support such transactions (this is shown at Figure 2).

ECC can transact electronic cash instead of credit card/debit card account to a TS. This can be used as a currency exchange device so that a traveller going aboard can choose to have a set amount of specific currency in the country he or she is visiting.

ECC prevents merchants from using unauthorised transaction as each transaction can only be generated by an ECC with its unique transaction identifier. Merchants cannot generate a unique transaction identifier.

ECC can be incorporated in an electronic device or equipment. An example of such incorporation is in a mobile phone.

ECC keypads may be made from flex-board membrane, rubber, and/or plastic materials to provide durability and slim size. Keypads may be designed with round or square buttons.

ECC can be incorporated with a strip of magnetic tape at the back with keypads on the front to facilitate SAC telecommunications. The audio transducer can be used as a telecommunications device to send SAC via a telephone line to a merchant with TS facility to process a transaction.

ECC sending SAC uses a unique transaction identifier for each transaction.

ECC can be used to store more than one credit card/debit card account. These can be cards distributed from different financial institutions/organisations/companies.

ECC can retain the credit card/debit card approved credit card/debit card financial limit and provide the user (customer) the information regarding his or her financial balance of his or her account limit outstanding. This is available to one or more credit card/debit card account(s).

### Drawings Numbering Definitions:

1: Keypad for PIN entry and transactions.
2: Information Display Unit.
3: ENTER key to enable (confirm) a transaction (security access).
4: Audio transducer.
5: Infra-red telecommunication device.
6: Magnetic telecommunication device.
7: Radio frequency telecommunication device (antenna).
8: Wire Contact telecommunication device.
9: Magnetic Tape strip with coded information.
10: Fingerprint scanner pad for transaction entry (security access).
11: Eyeball retina scanner pad for transaction entry (security access).
12: Scanner Entry Key

The following items are preferred embodiments of the invention:
1. Electronic Credit Card - ECC is an Intelligent Card. It is an electronic device capable of sending and receiving information in an electronic mode. The device is able to communicate with a host computer that is either a mainframe or personal computer (PC) with its internal devices.
2. ECC is only operational through one of the following process (hereafter known as SAC [security authorisation code]):
   - A user controlled PIN (personal identification number) and/or
   - A user identified fingerprint signature (digital signature) and/or
   - A user eyeball retina signature (digital signature).
      Such process can be self-contained in an ECC or via a database in a local or remote system.
      An audio transducer is used to confirm a successful process via a PIN, fingerprint and eyeball retina scan signature of an ECC holder.
3. ECC has a self-contained timer that deactivates its SAC after an elapsed time. This feature eliminates a stolen ECC from being used when a PIN and/or digital signature is already activated.
4. An ECC is self-destructed if a pre-determined number of attempts are made to gain access to its operation in sending SAC. This is to prevent frauds in the event that an ECC is stolen. The authorising distributor could re-initialise an ECC through its control management system that is used to issue ECC.
5. ECC can be disabled at a Transaction Station (hereafter known as TS) through a system control function controlled by an issuing company or organisation. This enables immediate termination of an ECC if required.
   ECC is an intelligent device that communicates with TS via one of the following modes or a combination of the following modes:
   - Infra-red telecommunication process (figure 4) and/or
   - Radio frequency telecommunication process (figure 5) and/or
   - Magnetic induction telecommunication process (figure 6) and/or
   - Wire contact telecommunication (figure 7) process.
6. ECC has the capability to download information to a computer system via one of its telecommunication modes above. This ensures data integrity at the time of power source replacement or charging. Furthermore it also facilitates transactional history.
7. ECC sending SAC uses a unique transaction identifier for each transaction.
8. ECC can be incorporated in an electronic device or equipment. An example of such incorporation is in a mobile phone.
9. ECC has the capability to generate its own transaction number either in sync with an TS link to a local or remote site system control function or independently. TS may or could be an Internet site with such capability.
10. ECC financial limit can be verified via TS with link to a local or remote site system control function. This controls an ECC from generating further transactions once its financial limit is reached. This function of limiting funds is an optional mode that can be either activated by the financial institution that issue the ECC or by the holder to cross check and alert him or her of his or her account balance.
11. ECC can transact funds to and from an Automatic Teller Machine (ATM) via an ATM management system (this is shown at Figure 3). This enables ECC to provide and support a cash-less society. ECC can also be linked to a Personal Computer (PC) to provide and support such transactions (this is shown at Figure 2).
12. ECC can transact electronic cash instead of credit card/debit card funds to a TS. This can be used as a currency exchange device so that a traveller going aboard can choose to have a set amount of specific currency in the country he or she is visiting.
13. ECC prevents merchants from using unauthorised transaction as each transaction can only be generated by an ECC with its unique transaction identifier. Merchants cannot generate a unique transaction identifier.
14. ECC keypads may be made from flex-board membrane, rubber, and/or plastic materials to provide durability and slim size. Keypads may be designed with round or square buttons.
15. ECC can be incorporated with a strip of magnetic tape at the back with keypads on the front to facilitate SAC telecommunications. The audio transducer can be used as a telecommunications device to send SAC via a telephone line to a merchant with TS facility to process a transaction.
16. ECC can be used to store more than one credit card/debit card account. These can be cards distributed from different financial institutions/organisations/companies.
17. ECC can retain the credit card/debit card approved credit card/debit card financial limit and provide the user (customer) the information regarding his or her financial balance of his or her account limit outstanding. This is available to one or more credit card/debit card account(s).

## Claims

1. An electronic credit card comprising:
a user verification means for verifying the identity of a user; and
a communication means for communicating with a transaction station, **characterised in that** the electronic credit card further comprises:
a means that generates a unique authorisation code when the user's identity is verified;
a storage means that stores the user's account details for use in an electronic funds transfer transaction;
wherein the communication means securely communicates the account details of the user and the authorisation code to facilitate an electronic fund transfer transaction.

2. An electronic credit card in accordance with claim 1, wherein the electronic credit card includes a timer means for ending the verification of the user's identity ends after a period of time.

3. An electronic credit card in accordance with claim 1 or 2, wherein the electronic credit card includes a disablement means for disabling use of the electronic credit card if a predetermined number of attempts verify the identity of the user fail.

4. An electronic credit card in accordance with claim 3, wherein the disablement means is operates when activated remotely by an issuer of the electronic credit card or other authority.

5. An electronic credit card in accordance with any of claims 1 to 4, wherein the unique authorisation code is generated in synchronisation with the transaction station.

6. An electronic credit card in accordance with claim 1, wherein the storage means is arranged to store a user activated financial limit wherein transactions over the financial limit are disallowed.

7. An electronic credit card in accordance with claim 6, wherein communication means is configured to provide the financial limit to the transaction station.

8. An electronic credit card in accordance with any of claims 1 to 7, wherein the electronic credit card includes a processor means for tracking of the use of the electronic credit card and will not generate or provide the authorisation code if the financial limit is exceeded.

9. An electronic credit card in accordance with claim 6, wherein the financial limit may be retrieved via the transaction station from a financial institution for storage in the storage means.

10. An electronic credit card in accordance with any of claims 1 to 9, wherein the storage means is arranged to store more than one set of account details from different debit/credit card accounts, wherein one of the account details is selected for transmission by the communication means and the use in the electronic funds transfer transaction.

11. An electronic credit card in accordance with any of claims 6 to 10, wherein the storage means stores transaction details and a processor means is provided to calculate the funds available from the user activated financial limit.

12. An electronic credit card as claimed in anyone of claims 1 to 11, wherein the means that generates the unique authorisation code generates the unique authorisation code immediately upon verification of the identity of the user with no additional input.

13. An electronic credit card as claimed in any one of claims 1 to 12, wherein the means for generating the unique authorisation code generates the unique authorisation code synchronously with the transaction station, or independently.

14. An electronic credit card as claimed in any one of claims 1 to 13, wherein the unique authorisation code is formed by using a unique transaction identifier created for each transaction on a security authorisation code obtain from the use when the user's identify is verified.

15. An electronic credit card as claimed in claim 1 to 14, wherein the user verification means receives the security authorisation code input from a user and the user verification means uses the received security authorisation code to verify the identify of the user.

16. An electronic credit card as claimed in any one of claims 1 to 13, wherein the user verification means receives a security authorisation code input from a user and the user verification means uses the received security authorisation code to verify the identify of the user.

17. A method of performing an electronic fund transfer transaction comprising:
providing an electronic credit card comprising a user verification means for verifying the identity of a user, a means that generates a unique authorisation code when the user's identity is verified, a communication means for communicating with a transaction station, and a storage means that stores the user's account identification details for use with an electronic fund to transfer transaction;
verifying the identity of the user;
generating a unique authorisation code when the user's identity is verified; securely communicating the unique authorisation code and the user's account identification details to a transaction station; and
using the user's account identification details to conduct an electronic fund transfer transaction as authorised by the unique authorisation code.

18. A system for conducting an electronic fund transfer transaction comprises:
an electronic credit card comprising a user verification means for verifying the identity of a user, communication means that securely communicates with a transaction station, a means that generates a unique authorisation code when the user identity is verified, and a storage means that stores the user's account identification details;
a transaction station that is arranged to receive from the electronic credit card the unique authorisation code and the account identification details; and
a host computer of an electronic fund transfer transaction facilitator that is arranged to receive the secret unique authorisation code and account identification details from the transaction station and is further arranged to conduct an electronic funds transfer transaction using the received account identification details as authorised by the unique authorisation code.
